# EUROPEAN PATENT SPECIFICATION

(11) **EP 3 708 890 B1**
(45) Date of publication and mention of the grant of the patent: **01.03.2023**
(21) Application number: 20161854.3
(22) Date of filing: 09.03.2020
(51) Int. Cl.: F16K 35/00, F16K 5/06, F16L 37/47, F16K 27/06

(54) **FLOW CONTROL VALVE WITH SAFETY COUPLING**
DURCHFLUSSREGELVENTIL MIT SICHERHEITSKUPPLUNG
SOUPAPE DE RÉGULATION DE DÉBIT COMPORTANT UN COUPLAGE DE SÉCURITÉ

(30) Priority: 11.03.2019 IT 201900003449
(43) Date of publication of application: 16.09.2020
(73) Proprietor: Colombo, Renato, 25015 Desenzano del Garda (BS) (IT)
(72) Inventor: Colombo, Renato, 25015 Desenzano del Garda (BS) (IT)
(74) Representative: Modiano, Micaela Nadia

(56) References cited:
- EP-A2- 1 302 715
- CH-A1- 705 400
- US-A- 4 397 445

## Description

The present invention relates to a flow control valve with safety coupling.

Flow control valves with safety coupling are known which have a flexible hose which can be connected, by means of an adapted bayonet coupling, to the output duct of the flow control valve.

Specifically, the disengagement of the flexible hose from the output duct can be performed only when the flow control valve is in the closed condition.

Currently known solutions generally have lever systems or kinematic systems for connection between the output duct and the actuation body of the valve.

Accordingly, these solutions are rather complicated from the constructive standpoint, since they provide for a rather large number of components with a consequent increase in costs and space occupation. Document CH705400A1 discloses a known shut-off valve with a quick-release connector.

The aim of the present invention is to provide a flow control valve with safety coupling that it is capable of improving the background art in one or more of the aspects indicated above.

Within this aim, an object of the invention is to provide a flow control valve with safety coupling that is extremely simple from the constructive standpoint.

Another object of the invention is to provide a flow control valve with safety coupling that is highly reliable, relatively easy to provide and at competitive costs.

This aim, as well as these and other objects which will become better apparent hereinafter, are achieved by a flow control valve with safety coupling according to claim 1, optionally provided with one or more of the characteristics of the dependent claims.

Further characteristics and advantages of the invention will become better apparent from the description of a preferred but not exclusive embodiment of the flow control valve with safety coupling according to the invention, illustrated by way of non-limiting example in the accompanying drawings, wherein:

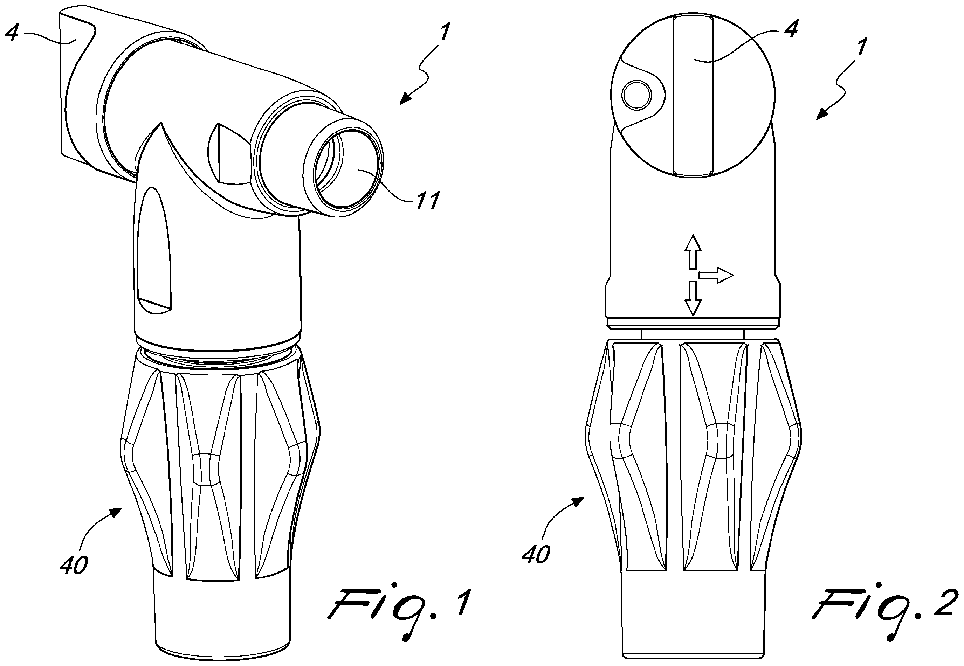

Figure 1 is a perspective view of a flow control valve with safety coupling according to the invention in the open condition;
Figure 2 is a front elevation view of the flow control valve in the open condition;
Figure 3 is another perspective view of the flow control valve with safety coupling in the open condition with the outer enclosure omitted for the sake of greater clarity so as to allow to view the coupling between the ball and the output duct;
Figure 4 is a perspective view of a flow control valve with safety coupling according to the invention in the closed condition;
Figure 5 is a front elevation view of the flow control valve in the closed condition;
Figure 6 is another perspective view of the flow control valve with safety coupling in the closed condition with the outer enclosure omitted for the sake of greater clarity so as to allow to view the coupling between the ball and the output duct;

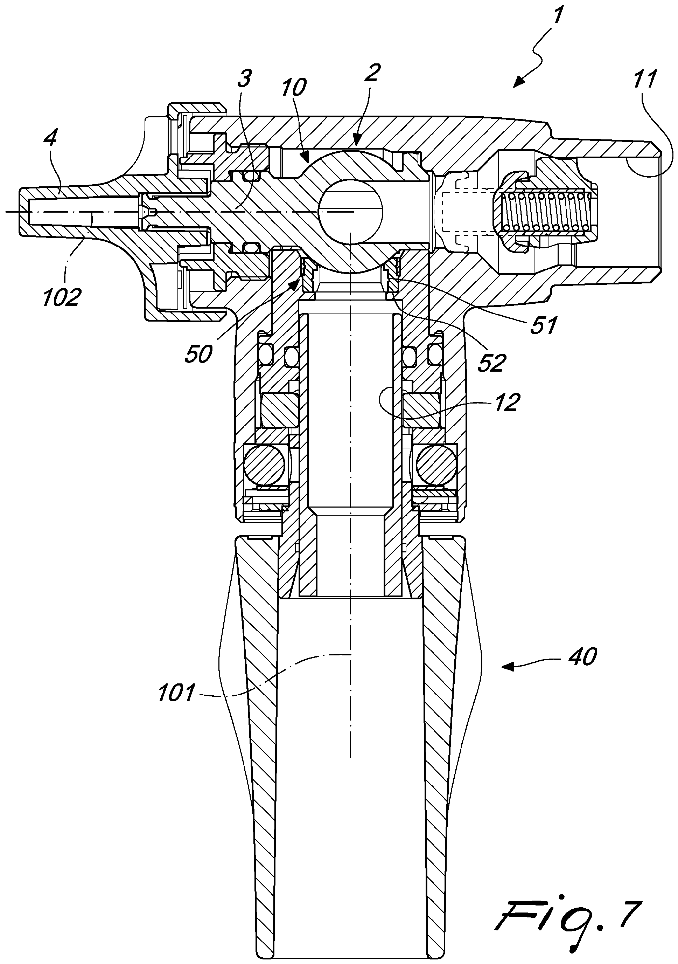

Figure 7 is a sectional view of the flow control valve along the plane of arrangement defined by the line VII-VII of Figure 6;

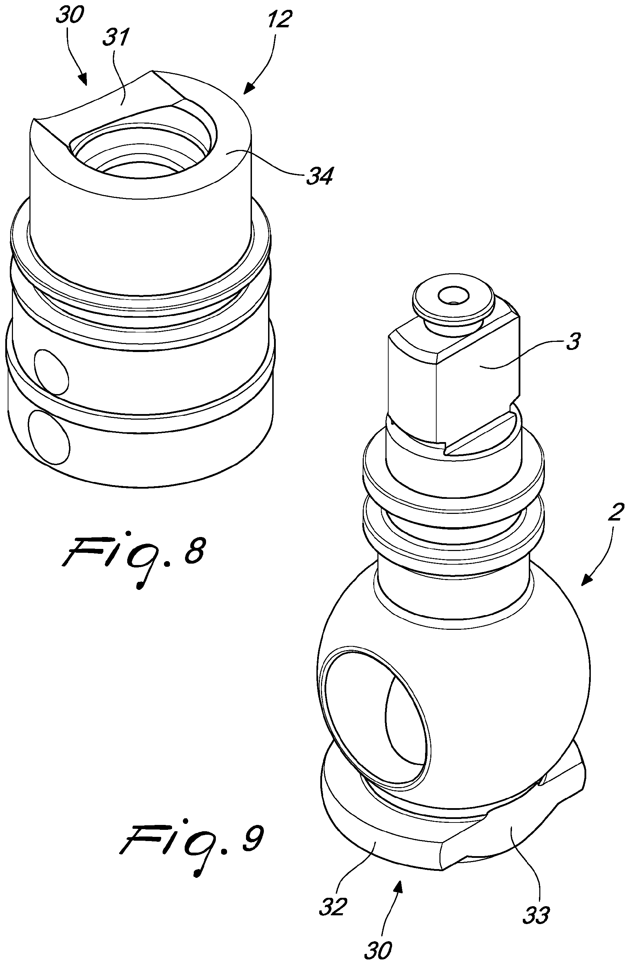

Figure 8 is a perspective view of the output duct;
Figure 9 is a perspective view of the flow control ball.

With reference to the figures, the flow control valve 1 with safety coupling according to the invention, designated generally by the reference numeral 1, comprises a hollow valve body 10 which has at least one first open tubular portion 11 for fluid intake and at least one second open tubular portion 12 for fluid discharge.

The hollow valve body 10 accommodates a flow control element 2, which can move between at least one flow intake position and a flow control position.

The flow control element 2 is associated with a stem 3 for movement, said stem 3 being actuatable by means of an actuation element 4.

The second open tubular portion 12 can rotate about its own axis of extension 101 in order to determine its engagement or disengagement with a safety coupling 40 associated with a fluid delivery or output duct.

Advantageously, the fluid delivery duct comprises a flexible hose.

According to the present invention, the second open tubular portion 12 and the flow control element 2 have respective mutual coupling portions 30 which are shaped complementarily and are designed, when the flow control element 2 is in the intake position, to determine the locking of the second open tubular portion 12 about its own axis of extension 101.

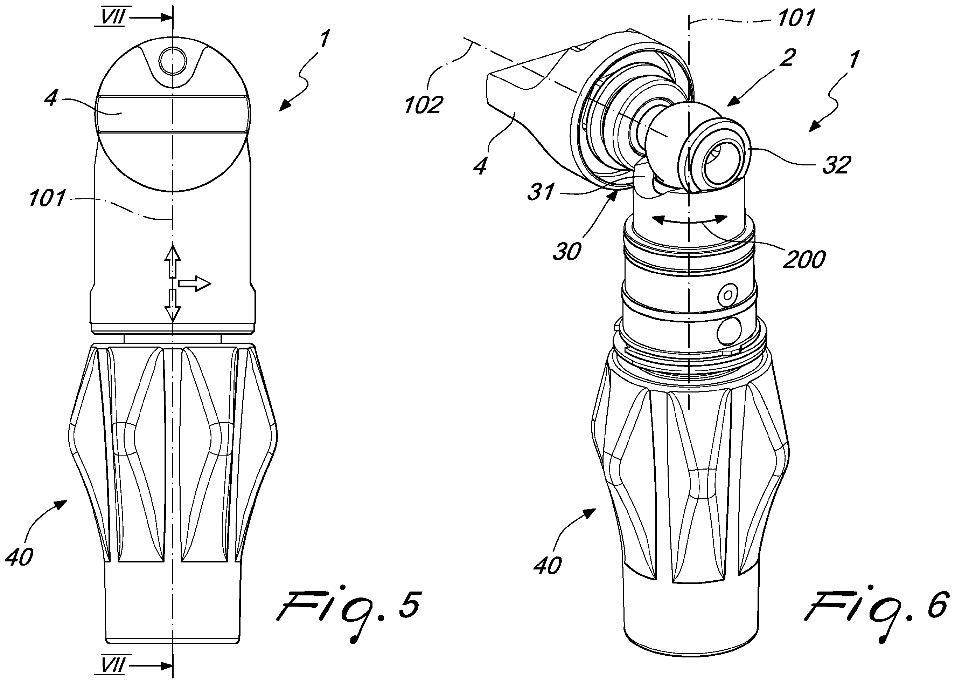

When the flow control element 2 is in the flow control position, the mutual coupling portions 30 are mutually uncoupled so as to allow the rotation of the second open tubular portion 12 about its own axis of extension 101, as indicated by the arrow 200 of Figure 6.

The mutual coupling portions 30 comprise a seat 31, which is formed on the second open tubular portion 12, and an engagement body 32, which can be accommodated in the seat 31 when the flow control element 2 is in the intake position.

The engagement body 32 is formed on the flow control element 2.

Conveniently, the flow control element 2 comprises a flow control ball, which can rotate about an actuation axis 102 which substantially corresponds to the axis of the stem 3.

The axis of extension 101 of the second open tubular portion is arranged substantially at right angles to the actuation axis 102.

Advantageously, the seat 31 is provided on the second open tubular portion 12 and the engagement body 32 is formed on the flow control element 2 and is rotationally integral with the latter about the respective actuation axis 102.

The seat 31 comprises a saddle-shaped portion that is formed at the edge 34 of the second open tubular portion 12 that is directed toward the flow control element 2.

The engagement body 32 comprises an engagement portion which is integral with the flow control element 2 (or is provided thereon) and extends, radially with respect to said actuation axis 102, more than a recess 33 arranged adjacent to the engagement portion 32 and designed to face in a substantially parallel manner the edge 34 of the second open tubular portion 12 when the flow control element 2 is moved to the flow control position.

Preferably, the safety coupling comprises a bayonet coupling 40.

According to a particularly important aspect of the present invention, sealing means 50 are provided and arranged between the flow control element 2 and the second open tubular portion 12.

Conveniently, the sealing means 50 comprise at least one gasket 51 which is accommodated in a respective accommodation seat 52 which is provided or in any case integral with the second open tubular portion 12.

Advantageously, the flow control valve 1 comprises a flow control valve for gas.

The use of the flow control valve 1 according to the invention is as follows.

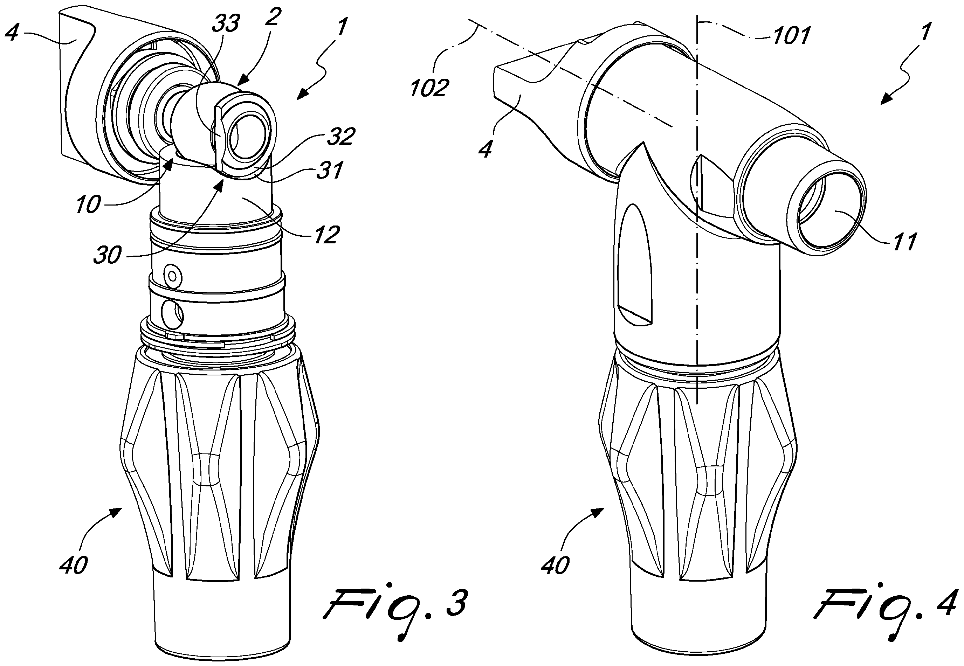

When the flow control element 2 accommodated in the hollow valve body 10 is in the flow intake position (see Figure 3), the engagement body 32 is accommodated in the seat 31 and consequently blocks the rotation of the second open tubular portion 12, thus avoiding the possibility of uncoupling the safety coupling 40.

By moving, by means of the actuation element 4, the flow control element 2 into the flow control position (see Figure 6), the engagement body 32 is disengaged from the seat 31 and the recess 33 faces the edge 34, thus allowing the rotation of the second open tubular portion 12 and therefore the optional coupling and uncoupling of the safety coupling.

In practice it has been found that the invention achieves the intended aim and objects, providing a flow control valve 1 with safety coupling that is extremely simple from the constructive standpoint.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A flow control valve (1) with safety coupling, comprising a hollow valve body (10) provided with at least one first open tubular portion (11) for fluid intake and at least one second open tubular portion (12) for fluid discharge, a flow control element (2) which is accommodated in said hollow valve body (10) and is movable between at least one flow intake position and a flow control position, a stem (3) for the movement of said flow control element (2) which can be actuated by means of an actuation element (4), said second open tubular portion (12) being configured to be able to rotate about its own axis of extension (101) in order to produce engagement or disengagement with a safety coupling (40) associated with a delivery duct of said fluid, wherein said second open tubular portion (12) and said flow control element (12) have respective mutual coupling portions (30) which are shaped complementarily and are designed, when said flow control element (2) is in the intake position, to determine the locking of said second open tubular portion (12) around said axis of extension (101), with said flow control element (2) in the flow control position said mutual coupling portions (30) being mutually uncoupled so as to allow the rotation of said open tubular portion (12) about said axis of extension (101),
wherein said flow control element (2) comprises a flow control ball which can rotate about an actuation axis (102), and wherein said axis of extension (101) of said second open tubular portion is arranged substantially at right angles to said actuation axis (102);
wherein said mutual coupling portions (30) comprise a seat (31), which is formed on said second open tubular portion (12), and an engagement body (32), which can be accommodated in said seat (31) formed on said flow control element (2),
said seat (31) comprising a saddle-shaped portion which is formed at the edge (34) of said second open tubular portion (12) that is directed toward said flow control element (2);
**characterized in that** said engagement body (32) comprises an engagement portion which is integral with said flow control element (2) and is extended in a radial direction with respect to said actuation axis more than a recess (33) which is arranged adjacent to said engagement body and is designed to face in a substantially parallel arrangement said edge (34) of said second open tubular portion (12) with said flow control element (2) in the flow control condition.

2. The flow control valve (1) according to one or more of the preceding claims, **characterized in that** it comprises sealing means (50) arranged between said flow control element (2) and said second open tubular portion (12), said sealing means (50) comprising at least one gasket (51) which is accommodated in a respective accommodation seat (52) provided on said second open tubular portion (12).

3. Use of a flow control valve (1) according to one or more of the preceding claims for gas.

## Patentansprüche

1. Ein Durchflussregelventil (1) mit Sicherheitskupplung, das einen hohlen Ventilkörper (10) umfasst, ausgestattet mit mindestens einem ersten offenen röhrenförmigen Abschnitt (11) für den Fluideinlass und mindestens einem zweiten offenen röhrenförmigen Abschnitt (12) für den Fluidauslass, ein Durchflussregelelement (2), das in den hohlen Ventilkörper (10) aufgenommen ist und zwischen mindestens einer Flusseinlassposition und einer Flussregelungsposition beweglich ist, einen Schaft (3) zum Bewegen des Durchflussregelelements (2), der mit Hilfe eines Antriebselements (4) angetrieben werden kann; wobei der zweite offene röhrenförmige Abschnitt (12) ausgebildet ist, um sich um seine eigene Erstreckungsachse (101) drehen zu können, um einen Eingriff oder Nicht-Eingriff mit einer Sicherheitskupplung (40) herzustellen, die mit einer Ablassleitung des Fluids verbunden ist; wobei der zweite offene röhrenförmige Abschnitt (12) und das Durchflussregelelement (12) entsprechende Abschnitte (30) zur gegenseitigen Kopplung haben, die komplementär geformt und konstruiert sind, um, wenn sich das Durchflussregelelement (2) in der Einlassposition befindet, das Blockieren des zweiten offenen röhrenförmigen Abschnitts (12) um die Erstreckungsachse (101) herum zu bestimmen; wobei die Abschnitte (30) zur gegenseitigen Kopplung voneinander entkoppelt sind, wenn sich das Durchflussregelelement (2) in der Durchflussregelposition befindet, um die Drehung des offenen röhrenförmigen Abschnitts (12) um die Erstreckungsachse (101) zu ermöglichen;
wobei das Durchflussregelelement (2) eine Durchflussregelungskugel umfasst, die sich um eine Antriebsachse (102) drehen kann, und wobei die Erstreckungsachse (101) des zweiten offenen röhrenförmigen Abschnitts im Wesentlichen in rechten Winkeln zu der Antriebsachse (102) angeordnet ist;
wobei die Abschnitte (30) zur gegenseitigen Kopplung einen Sitz (31) umfassen, der an dem zweiten offenen röhrenförmigen Abschnitt (12) geformt ist, und einen Eingriffskörper (32), welcher in den an dem Durchflussregelelement (2) geformten Sitz (31) aufgenommen werden kann;
wobei der Sitz (31) einen sattelförmigen Abschnitt umfasst, der an dem Rand (34) des zweiten offenen röhrenförmigen Abschnitts (12) geformt ist, welcher dem Durchflussregelelement (2) zugewandt ist;
**dadurch gekennzeichnet, dass** der Eingriffskörper (32) einen Eingriffsabschnitt umfasst, der integral mit dem Durchflussregelelement (2) ist und sich weiter in eine radiale Richtung mit Bezug auf die Antriebsachse als eine Vertiefung (33) erstreckt, die angrenzend an den Eingriffskörper angeordnet ist und konstruiert ist, um in einer im Wesentlichen parallelen Anordnung dem Rand (34) des zweiten offenen röhrenförmigen Abschnitts (12) zugewandt zu sein, wenn sich das Durchflussregelelement (2) im Durchflussregelungszustand befindet.

2. Das Durchflussregelventil (1) gemäß einem oder mehreren der obigen Ansprüche, **dadurch gekennzeichnet, dass** es Abdichtungsmittel (50) umfasst, die zwischen dem Durchflussregelelement (2) und dem zweiten offenen röhrenförmigen Abschnitt (12) angeordnet sind, wobei die Abdichtungsmittel (50) mindestens eine Dichtung (51) umfassen, die in einem entsprechenden an dem zweiten offenen röhrenförmigen Abschnitt (12) angebrachten Aufnahmesitz (52) untergebracht ist.

3. Verwendung eines Durchflussregelventils (1) gemäß einem oder mehreren der obigen Ansprüche für Gas.

## Revendications

1. Vanne de régulation de débit (1) avec couplage de sécurité, comprenant un corps de vanne creux (10) pourvu d'au moins une première partie tubulaire ouverte (11) pour l'admission de fluide et d'au moins une seconde partie tubulaire ouverte (12) pour l'évacuation de fluide, un élément de régulation de débit (2) qui est accueilli dans ledit corps de vanne creux (10) et est mobile entre au moins une position d'admission et une position de régulation de débit , une tige (3) pour le mouvement dudit élément de régulation de débit (2) qui peut être actionnée au moyen d'un élément d'actionnement (4), ladite seconde partie tubulaire ouverte (12) étant configurée pour pouvoir tourner autour de son propre axe d'extension (101) afin de produire un engagement ou un désengagement avec un couplage de sécurité (40) associé avec un conduit d'évacuation dudit fluide, dans laquelle ladite seconde partie tubulaire ouverte (12) et ledit élément de régulation de débit (12) ont des parties de couplage mutuel (30) respectives qui sont formées complémentairement et sont conçues, quand ledit élément de régulation de débit (2) est dans la position d'admission, pour déterminer le blocage de ladite seconde partie tubulaire ouverte (12) autour dudit axe d'extension (101), avec ledit élément de régulation de débit (2) dans la position de régulation de débit lesdites parties de couplage mutuel (30) étant découplées mutuellement de façon à permettre la rotation de ladite partie tubulaire ouverte (12) autour dudit axe d'extension (101),
dans laquelle ledit élément de régulation de débit (2) comprend un bille de régulation de débit qui peut tourner autour d'un axe d'actionnement (102), et dans laquelle ledit axe d'extension (101) de ladite seconde partie tubulaire ouverte est agencée sensiblement à angle droit dudit axe d'actionnement (102) ;
dans laquelle lesdites parties de couplage mutuel (30) comprennent un siège (31), qui est formé sur ladite seconde partie tubulaire ouverte (12), et un corps d'engagement (32), qui peut être accueilli dans ledit siège (31) formé sur ledit élément de régulation de débit (2),
ledit siège (31) comprenant une partie en forme de selle qui est formée au niveau du bord (34) de ladite seconde partie tubulaire ouverte (12) qui est dirigé vers ledit élément de régulation de débit (2) ;
**caractérisé en ce que** ledit corps d'engagement (32) comprend une partie d'engagement qui est d'un seul bloc avec ledit élément de régulation de débit (2) et s'étend dans une direction radiale par rapport audit axe d'actionnement plus qu'un évidement (33) qui est agencé adjacent audit corps d'engagement et est conçu pour faire face dans un agencement sensiblement parallèle audit bord (34) de ladite seconde partie tubulaire ouverte (12) avec ledit élément de régulation de débit (2) dans l'état de régulation de débit .

2. Vanne de régulation de débit (1) selon une ou plusieurs des revendications précédentes, **caractérisée en ce qu'**elle comprend des moyens d'étanchéité (50) agencés entre ledit élément de régulation de débit (2) et ladite seconde partie tubulaire ouverte (12), lesdits moyens d'étanchéité (50) comprenant au moins une garniture (51) qui est accueillie dans un siège d'accueil respectif (52) placé sur ladite seconde partie tubulaire ouverte (12).

3. Utilisation d'une vanne de régulation de débit (1) selon une ou plusieurs des revendications précédentes pour du gaz.
